# EUROPÄISCHE PATENTANMELDUNG

(11) **EP 0 860 104 A1**
(43) Veröffentlichungstag der Anmeldung: **26.08.1998**
(21) Anmeldenummer: 98102178.5
(22) Anmeldetag: 09.02.1998
(51) Int. Cl.: A01C 15/00, A01C 17/00

(54) **System zum Ausbringen von mehreren Sorten Material in einem Arbeitsgang**

(30) Priorität: 20.02.1997 DE 19706600; 01.04.1997 DE 19713408
(71) Anmelder: Amazonen-Werke H. Dreyer GmbH & Co. KG, D-49205 Hasbergen (DE)
(72) Erfinder: Dreyer, Heinz, Dr. Dipl.-Ing., 49205 Hasbergen (DE)

(57) **Zusammenfassung**

System zum Ausbringen von mehreren Sorten von Material in einem Arbeitsgang mit an einem Ackerschlepper anbaubarer Verteilvorrichtung. Die Verteilvorrichtung weist zwei getrennte Vorratsbehälter mit Dosiereinrichtungen und Verteilorganen auf. Die Verteilorgane sind in zwei übereinander liegenden Ebenen angeordnet.

## Beschreibung

Die Erfindung betrifft ein System gemäß des Oberbegriffes des Patentanspruches 1.

Ein derartiges System ist beispielsweise in der DE-OS 20 44 566 beschrieben. Bei diesem System wird ein Schleuderstreuer mit zwei Schleuderscheiben, die in unterschiedlichen Höhen angeordnet sind, verwendet. Diesen Schleuderscheiben ist jeweils ein Teilbehälter eines Vorratsbehälters zugeordnet. In jedem Teilbehälter kann eine andere Materialsorte eingefüllt werden, so daß in einem Arbeitsgang zwei verschiedene Sorten von Material ausgestreut werden kann. Jedes der Streuorgane streut somit ein anderes Material aus. Es wird also ermöglicht, die beiden verschiedenen Materialsorten über den gleichen Geländestreifen während der Fortbewegung auszustreuen. Von Nachteil ist bei diesem bekannten System, daß die Schleuderscheiben hintereinander angeordnet sind. Desweiteren ist dieser Streuer als Spezialstreuer ausgebildet, in dem die beiden Dosiereinrichtungen und Verteileinrichtungen hintereinander liegend angeordnet sind. Darüber hinaus ist nachteilig, daß der Schwerpunkt des Streuers sehr weit hinten liegt.

Der Erfindung liegt die Aufgabe zugrunde, in einfacher Weise ein System zu schaffen, mit dem es möglich ist, entsprechend der Nährstoffversorgung des Bodens den fehlenden Nährstoff mit einer einfach ausgebildeten Maschine auszubringen.

Diese Aufgabe wird durch die Merkmale des Anspruches 1 gelöst. Infolge dieser Maßnahmen ergibt sich eine einfach aufgebaute Maschine. Es ist möglich, vorhandene Verteilmaschinen übereinander anzuordnen und so die getrennten Nährstoffsorten von Material auszustreuen. In einfacher Weise läßt dieses System sich mit den Merkmalen des Patentanspruches 2 verwirklichen.

Eine einfacher Ausbringung wird dadurch gewährleistet, daß die Verteilmaschinen als Zentrifugalstreuer mit zwei rotierend angetriebenen Schleuderscheiben ausgebildet sind.

Um in einfacher Weise sicherzustellen, daß von den Verteilorganen der beiden Verteilmaschinen das Material über die gleiche Breite ausgestreut wird, ist vorgesehen, daß zumindest die obere Verteilmaschine mittels eines längeneinstellbaren Oberlenkers um eine quer zur Fahrtrichtung verlaufende horizontale Achse in ihrer Neigung einstellbar am Rahmen angeordnet ist.

Eine gute Anordnung der Maschine auf einem möglichst nahen Schwerpunkt zum Schlepper läßt sich dadurch verwirklichen, daß die beiden Verteilorgane zumindest annähernd in der gleichen senkrechten Ebene übereinander liegend angeordnet sind. Desweiteren ergibt sich hierdurch, daß die Sternbilder der beiden Verteilmaschinen deckungsgleich sind.

Eine äußerst genaue und automatische Anpassung der auszubringenden Nährstoffmenge je Nährstoffsorte entsprechend der teilflächenspezifischen Nährstoffversorgung läßt sich durch die kennzeichnenden Merkmale des Anspruches 5 realisieren.

Weitere Einzelheiten der Erfindung sind den übrigen Unteransprüchen, der Beispielsbeschreibung und den Zeichnungen zu entnehmen. Hierbei zeigen
- Fig.1: das Ausbringsystem mit den übereinander angeordneten Verteilmaschinen in Seitenansicht und in Prinzipdarstellung mit einem Ölmotorantrieb für die Schleuderscheiben und
- Fig.2: ein weiteres Ausbringsystem in Seitenansicht und in Prinzipdarstellung sowie mit einem mechanischen Antrieb für die Schleuderscheiben.

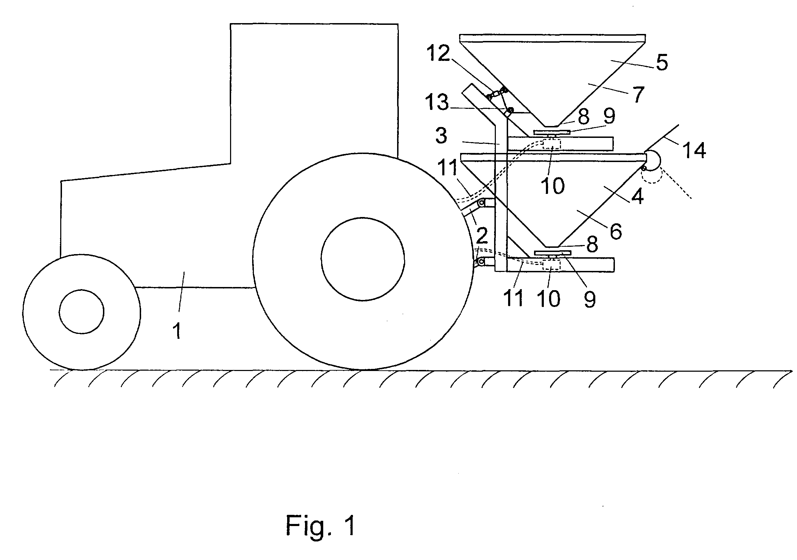

Das System zum Ausbringen von mehreren Sorten Material in einem Arbeitsgang besteht gemäß Fig.1 aus dem Schlepper 1 mit in dem in dem hinteren Dreipunktkraftheber 2 angeordneten Anbaurahmen 3, an dem zwei Verteilmaschinen 4 und 5 übereinander angeordnet sind. Die als Schleuderdüngerstreuer ausgebildeten Verteilmaschinen 4 und 5 weisen jeweils einen Vorratsbehälter 6 bzw. 7 mit einem Dosierorgan 8 auf, welches das Material in einstellbarer Weise dem als Schleuderstreuwerk 9 ausgebildeten Verteilorgan zuführt. Jede Verteilmaschine 5 und 6 weist eine derartige Dosiervorrichtung 8 auf, daß zumindest in zwei Arbeitsbreitenabschnitten die Ausbringmenge veränderbar ist. Hierdurch ist eine halbseitige Ausbringmengenänderung bzw. eine halbseitige Arbeitsbreitenreduzierung möglich. Mit der Verteilmaschine 4 wird beispielsweise Phosphor- und Stickstoffdünger und mit der Verteilmaschine 5 Kalidünger ausgebracht. Jeder Schleuderstreuer 4 und 5 weist zwei Schleuderscheiben 12 auf, denen jeweils eine Dosiereinrichtung 11 zugeordnet ist. Desweiteren ist ein nicht dargestellter Bordrechner zur Steuerung und Regelung der Ausbringmenge für die einzelnen Verteilmaschinen 4 und 5 vorgesehen. In dem Bordrechner sind standortspezifisch die Nährstoffversorgung des Bodens und die erforderliche Materialmenge abgespeichert. Der Bordrechner wirkt mit einer den Standort aktuell ermittelnden Vorrichtung, beispielsweise mit einer DGPS-Einrichtung zusammen. Über dem Bordrechner wird dann jedes Dosierorgan 8 entsprechend angesteuert, so daß der erforderliche Nährstoff in der erforderlichen Menge ausgebracht wird.

Die Schleuderscheiben 9 werden mittels Ölmotore 10, die über Leitungen 11 an die Hydraulikanlage des Schleppers oder an eine auf die Zapfwelle des Schleppers aufgesteckte Ölpumpe angetrieben.

Der obere Schleuderstreuer 5 ist über den einstellbaren Oberlenker 12 um die durch die Gelenkachse 13 in der Neigung einstellbar, so daß die Neigung der Schleuderscheiben eingestellt werden kann.

Um in den hinteren unteren Behälter 6 in einfacher Weise das Material einfüllen zu können, ist eine abklappbare Einfüllrutsche 14 vorgesehen. Der obere Schleuderstreuer 5 ist so hoch angeordnet, daß die Schleuderscheibe 9 das Material verteilen kann.

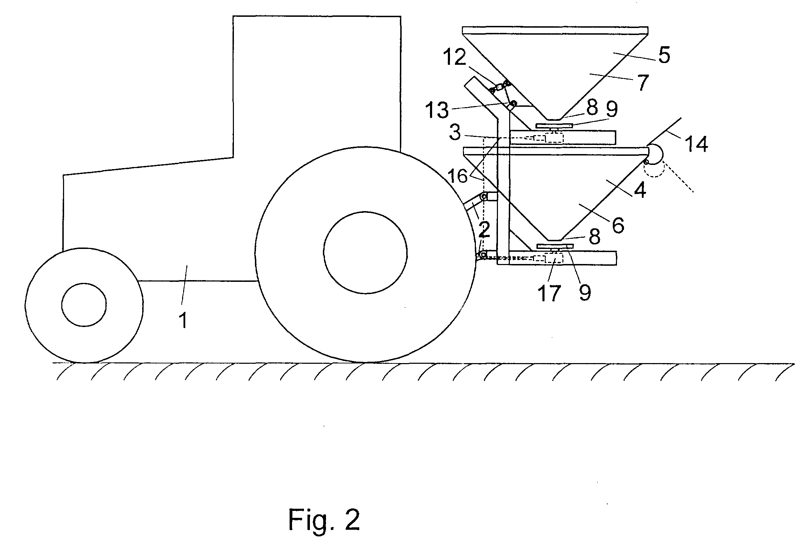

Das System zum Ausbringen von mehreren Düngersorten gemäß Fig. 2 unterscheidet sich vom System nach Fig. durch den mechanischen Antrieb der Schleuderscheiben 9. Mittels der Zapfwelle wird über eine Gelenkwelle 15 die unteren Schleuderscheiben angetrieben. Über den Antriebsstrang 16 werden von dem unteren Schleuderscheibengetriebe 17 die oberen Schleuderscheiben angetrieben.

## Patentansprüche

1. System zum Ausbringen von mehreren Sorten von Material in einem Arbeitsgang mit an einem Ackerschlepper anbaubarer Verteilvorrichtung, dadurch gekennzeichnet, daß die Verteilvorrichtung zwei getrennte Vorratsbehälter (6, 7) mit Dosiereinrichtungen (8) und Verteilorganen (9) aufweist, daß die Verteilorgane (9) in zwei übereinander liegenden Ebenen angeordnet sind.

2. System nach Anspruch 1, dadurch gekennzeichnet, daß die Verteileinrichtungen als Verteilmaschinen mit Vorratsbehälter (6, 7), Dosiereinrichtungen (8) und Verteilorganen (9) ausgebildet sind, daß ein Rahmen (3) zum Anbau an den Dreipunktkraftheber (2) des Ackerschleppers (1) vorgesehen ist, daß die Verteilmaschinen (4, 5) übereinander an dem Rahmen (3) angeordnet sind.

3. System nach Anspruch 2, dadurch gekennzeichnet, daß die Verteilmaschinen als Zentrifugalstreuer (4, 5) mit zwei rotierend angetriebenen Schleuderscheiben (9) ausgebildet sind.

4. System nach einem oder mehreren der vorstehenden Ansprüche, dadurch gekennzeichnet, daß zumindest die obere Verteilmaschine (5) mittels eines längeneinstellbaren Oberlenkers (12) um eine quer zur Fahrtrichtung verlaufende horizontale Achse (13) in ihrer Neigung einstellbar am Rahmen (3) angeordnet ist.

5. System nach einem oder mehreren der vorstehenden Ansprüche, dadurch gekennzeichnet, daß die beiden Verteilorgane (9) zumindest annähernd in der gleichen senkrechten Ebene übereinanderliegend angeordnet sind.

6. System nach einem oder mehreren der vorstehenden Ansprüche, dadurch gekennzeichnet, daß ein Bordrechner zur Steuerung und/oder Regelung der Ausbringmenge für die einzelnen Verteilmaschinen vorgesehen ist, daß in dem Bordrechner standortspezifisch die Nährstoffversorgung des Bodens und /oder standortspezifisch die erforderliche Materialmenge abgespeichert ist, daß der Bordrechner mit einer den Standort aktuell ermittelnden Vorrichtung, beispielsweise einer DGPS-Einrichtung zusammenwirkt.

7. System nach einem oder mehreren der vorstehenden Ansprüche, dadurch gekennzeichnet, daß der an dem Anbauraum (3) angebaute Schleuderstreuer (5) derart im Bezug auf den unteren Schleuderstreuer (4) angeordnet ist, daß sich die Schleuderscheiben (9) oberhalb der oberen Kante des oberen Schleuderstreuers (5) befinden.

8. System, insbesondere nach einem oder mehreren der vorstehenden Ansprüche, dadurch gekennzeichnet, daß ein Anbaurahmen (3) vorgesehen ist, an welchem zwei Verteilmaschinen (4, 5) übereinander an der Rückseite des Schleppers (1) anordbar sind.

9. System nach Anspruch 8, dadurch gekennzeichnet, daß an der Oberseite des Vorratsbehälters (6) der unteren Verteilmaschine (4) eine Einfüllrutsche (14) anordbar ist.

10. System nach Anspruch 9, dadurch gekennzeichnet, daß die Einfüllrutsche (14) schwenkbar befestigt ist.

11. System nach einem oder mehreren der vorstehenden Ansprüche, dadurch gekennzeichnet, daß die Schleuderscheiben (9) mittels eines mechanischen oder eines ölmotorischen Antriebes antreibbar sind.
